# EUROPEAN PATENT APPLICATION

(11) **EP 4 427 878 A1**
(43) Date of publication of application: **11.09.2024**
(21) Application number: 22909786.0
(22) Date of filing: 09.12.2022
(51) Int. Cl.: B23K 37/04

(54) **POSITIONING APPARATUS AND SOLDERING DEVICE**

(30) Priority: 21.12.2021 CN 202111576076
(71) Applicant: Contemporary Amperex Technology Co., Limited, Ningde, Fujian 352100 (CN)
(72) Inventor: WANG, Wenchong, NINGDE, Fujian 352100 (CN)
(74) Representative: Ran, Handong
(86) International application number: PCT/CN2022/138031
(87) International publication number: WO 2023/116471

(57) **Abstract**

A positioning apparatus (500) and a soldering device (50). The positioning apparatus (500) comprises a first positioning mechanism (510); the first positioning mechanism (510) comprises: a first fixing base (511), a first driving member (512), a first transmission member (513), a second transmission member (514), and a first abutment member (515); the first driving member (512) is provided on the first fixing base (511); the first driving member (512) is connected to the second transmission member (514) by means of the first transmission member (513), so as to drive the second transmission member (514) to move; a limiting member (5131) is provided on the first transmission member (513); the limiting member (5131) is connected to the second transmission member (514), and is used for limiting the stroke of the second transmission member (514); and the second transmission member (514) is connected to the first abutment member (515), and is used for driving the first abutment member (515) to move to position to an object to be positioned.

## Description

### CROSS-REFERENCE TO RELATED APPLICATIONS

This application claims priority to Chinese Patent Application No. 202111576076.5, filed on December 21, 2021 and entitled "POSITIONING APPARATUS AND WELDING EQUIPMENT", which is incorporated herein by reference in its entirety.

### TECHNICAL FIELD

This application relates to the technical field of automated assembling, and in particular, to a positioning apparatus and a piece of welding equipment.

### BACKGROUND

A power battery is formed by arranging a plurality of battery cells and mounting end plates around the battery cells. The end plates need to be fixed by welding, screwing or other means. Therefore, the accuracy of the positioning of the end plates affects the success rate of battery assembling and structural stability of the assembled battery.

The existing positioning apparatus just clamps the end plates simply, without ensuring the accuracy of the positions of the end plates clamped, thereby being prone to the problem of poor structural stability after battery assembling.

### SUMMARY

In view of the above problems, this application provides a positioning apparatus and a piece of welding equipment to solve the problem of inaccurate positioning of end plates in a battery assembling process.

According to one aspect of this application, a positioning apparatus is provided. The positioning apparatus includes a first positioning mechanism. The first positioning mechanism includes: a first fixed seat, a first driving piece, a first transmission piece, a second transmission piece, and a first abutment piece. The first driving piece is disposed on the first fixed seat. The first driving piece is connected to the second transmission piece through the first transmission piece to drive the second transmission piece to move. A limiting portion is disposed on the first transmission piece. The limiting portion is connected to the second transmission piece, and is configured to limit a stroke of the second transmission piece. The second transmission piece is connected to the first abutment piece, and is configured to drive the first abutment piece to move to position an object-to-be-positioned.

The positioning apparatus includes a first positioning mechanism. The first driving piece in the first positioning mechanism is disposed on the first fixed seat. By driving the first transmission piece to move, the first driving piece drives the second transmission piece to move. The second transmission piece is connected to the first abutment piece. When moving, the second transmission piece drives the first abutment piece to move to position the object-to-be-positioned. With the limiting portion connected to the second transmission piece and disposed on the first transmission piece, the second transmission piece is caused to automatically stop when moving to a travel limit position. In this way, the object-to-be-positioned automatically stops moving when being put into a desired position, thereby implementing a self-locking function after the first positioning mechanism defines the position, ensuring accuracy of positioning the object-to-be-positioned, avoiding poor positioning or excessive positioning, and effectively ensuring structural stability of the assembled battery.

In an optional implementation, the first transmission piece is slidably connected to the first fixed seat along a first direction. The second transmission piece is slidably connected to the first fixed seat along a second direction. The first direction is at an angle to the second direction. The limiting portion is a slide slot disposed on the first transmission piece. A connecting piece is disposed on the second transmission piece. The connecting piece is slidably disposed in the slide slot. The connecting piece abuts on an inner wall of the slide slot to limit the stroke of the second transmission piece. By slidably connecting the first transmission piece and the second transmission piece to the first fixed seat along the first direction and the second direction respectively, the first direction being at an angle to the second direction, the rectilinearity of the sliding directions of the first transmission piece and the second transmission piece is ensured, and in turn, the accuracy of the positioning is ensured. The limiting portion is designed as a slide slot, and a connecting piece slidably connected to the slide slot is disposed on the second transmission piece. In this way, when the first transmission piece moves, the inner wall of the slide slot provides an acting force to the connecting piece to drive the second transmission piece to move, thereby implementing the positioning for the object-to-be-positioned. In addition, when the second transmission piece moves to the desired position, the connecting piece abuts and retains the inner wall of the slide slot at an end of the slide slot, thereby limiting the stroke of the second transmission piece, and in turn, implementing self-locking of the object-to-be-positioned after positioning, ensuring the accuracy of positioning, and avoiding poor positioning or excessive positioning.

In an optional implementation, the first abutment piece is fixedly connected to the second transmission piece. The first abutment piece is slidably connected to the first fixed seat along the second direction so that the second transmission piece and the first fixed seat are slidably connected to each other. By fixedly connecting the first abutment piece to the second transmission piece and slidably connecting the first abutment piece to the first fixed seat along the second direction, the structure of the first positioning mechanism is optimized, so that a proper movement track of the second transmission piece can still be ensured without implementing connection between the second transmission piece and the first fixed seat. Moreover, by directly slidably connecting the first abutment piece to the first fixed seat along the second direction, the proper movement track of the first abutment piece is ensured more accurately, and inaccurate positioning caused by a deviated movement track of the first abutment piece is avoided.

In an optional implementation, the first direction is perpendicular to the second direction. The slide slot is disposed slantingly. In this way, when the first transmission piece slides, an inner wall of the slide slot pushes the connecting piece to drive the second transmission piece to slide. For the positioning and assembling of the battery end plates, the accuracy of the positioning of the end plates in a vertical direction is of vital importance. This application lets the first direction be perpendicular to the second direction, and disposes the slide slot slantingly. In this way, when the first driving piece and the first transmission piece move horizontally, the inner wall of the slide slot provides a force in the slanting direction to the connecting piece to push the second transmission piece and the first abutment piece to move along the vertical direction, thereby implementing accurate positioning of the object-to-be-positioned in the vertical direction, for example, accurate positioning of the end plates in the vertical direction.

In an optional implementation, the slide slot runs through the first transmission piece to form a slide hole, and the connecting piece runs through the slide hole. By letting the slide slot run through the first transmission piece to form a slide hole and letting the connecting piece run through the slide hole, the connecting piece is prevented from coming out of the slide slot when moving, thereby ensuring the stability of the transmission between the first transmission piece and the second transmission piece, and in turn, ensuring the accuracy of the positioning.

In an optional implementation, the connecting piece is rotatably disposed on the second transmission piece. By rotatably disposing the connecting piece on the second transmission piece, the sliding friction between the slide slot and the connecting piece is converted into rolling friction of the connecting piece relative to the inner wall of the slide slot when the first transmission piece drives the second transmission piece to move, thereby reducing the resistance of the first transmission piece in driving the second transmission piece to move, reducing energy consumption, and ensuring smoothness and steadiness of the transmission.

In an optional implementation, the positioning apparatus further includes a second positioning mechanism. The second positioning mechanism includes: a second fixed seat, a second driving piece, and a second abutment piece. The second fixed seat is disposed on a side of the first fixed seat, the side being oriented toward a movement direction of the first abutment piece. The second driving piece is disposed on the second fixed seat, connected to the second abutment piece, and configured to drive the second abutment piece to move along a direction at an angle to the movement direction of the first abutment piece, so as to position the object-to-be-positioned. The object-to-be-positioned is positioned in another direction by the second positioning mechanism. Specifically, by disposing the second fixed seat on a side of the first fixed seat oriented toward the movement direction of the first abutment piece, and by disposing the second driving piece on the second fixed seat and driving the second abutment piece to move in a direction at an angle to the movement direction of the first abutment piece, the object-to-be-positioned is positioned in the direction at an angle to the movement direction of the first abutment piece. In this way, the positioning can be implemented from a plurality of angles, thereby further ensuring the accuracy of positioning, meeting the positioning requirements of more products, and increasing the compatibility between the positioning apparatus and different objects-to-be-positioned.

In an optional implementation, the positioning apparatus further includes a ranging mechanism. The ranging mechanism is disposed on at least one of the first fixed seat or the second fixed seat and configured to detect a movement distance of the object-to-be-positioned. The ranging mechanism is fixed to the second fixed seat and aligned with the direction in which the second abutment piece is oriented. When the second abutment piece drives the object-to-be-positioned to move to perform positioning, the ranging mechanism obtains a displacement distance of the object-to-be-positioned by detecting the change in the length of the laser light path reaching the object-to-be-positioned, thereby determining whether the object-to-be-positioned is accurately positioned.

In an optional implementation, the ranging mechanism includes a laser rangefinder. The laser rangefinder is disposed on a side of the second fixed seat, the side is oriented toward the second abutment piece. An avoidance hole is created on the second abutment piece at a position opposite to the laser rangefinder. The avoidance hole is configured to transmit a laser beam emitted by the laser rangefinder to the object-to-be-positioned. By disposing the laser rangefinder on a side of the second fixed seat oriented toward the second abutment piece, and by creating the avoidance hole on the second abutment piece at a position opposite to the laser rangefinder, it is ensured that the movement distance of the object-to-be-positioned can still be detected even if the second abutment piece completely covers the object-to-be-positioned when the second abutment piece abuts on the object-to-be-positioned.

According to another aspect of this application, a piece of welding equipment is provided, including the positioning apparatus described in any one of the above implementations. In the welding equipment, the positioning apparatus stops moving and is self-locked when the object-to-be-positioned is put into a desired position by the positioning apparatus, thereby ensuring the accuracy of the positioning of the object-to-be-positioned, avoiding poor positioning or excessive positioning, providing good structural conditions for subsequent welding operations, and ensuring the structural stability of the object-to-be-positioned after the welding and assembling.

In an optional implementation, the welding equipment further includes a carrier and a welding apparatus. The carrier is configured to carry a battery module. The positioning apparatus is disposed on at least two sides of the carrier and configured to position the object-to-be-positioned. The welding apparatus is disposed in alignment with the carrier and configured to weld the object-to-be-positioned. The carrier makes it convenient to move and carry the battery module. The positioning apparatus implements accurate positioning of the end plates in the battery module, thereby ensuring good conditions for subsequent welding. The welding apparatus is configured to weld the positioned end plates to implement assembling of the battery module.

In an optional implementation, the object-to-be-positioned is an end plate of the battery module.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic three-dimensional structural diagram of a positioning apparatus according to an embodiment of this application;
FIG. 5 is a schematic three-dimensional structural diagram of a first positioning mechanism in a positioning apparatus according to an embodiment of this application;
FIG. 6 is a schematic structural front view of a first positioning mechanism in a positioning apparatus according to an embodiment of this application;
FIG. 7 is a schematic structural side view of a second positioning mechanism in a positioning apparatus according to an embodiment of this application;
FIG. 8 is a schematic three-dimensional structural diagram of a second positioning mechanism in a positioning apparatus according to an embodiment of this application; and
FIG. 9 is a schematic structural front view of a piece of welding equipment according to an embodiment of this application.

### List of reference numerals:

vehicle 1000;
battery 100, controller 200, motor 300;
box 10, first part 11, second part 12;
battery cell 20, end cap 21, electrode terminal 21a, housing 22, electrode assembly 23, tab 23a;
positioning apparatus 500, first positioning mechanism 510, first fixed seat 511, first driving piece 512, first body portion 5121, first driving rod 5122, first transmission piece 513, limiting portion 5131, slide hole 5131a, slide slot 5131b, second transmission piece 514, connecting piece 5141, first abutment piece 515, second positioning mechanism 520, second fixed seat 521, second driving piece 522, second body portion 5221, second driving rod 5222, second abutment piece 523, avoidance hole 5231, ranging mechanism 530;
welding equipment 50, carrier 600, welding apparatus 700;
battery module 90.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as nonexclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, the market trend shows that batteries are applied more extensively. Batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for batteries keeps soaring with the increase of the application fields of the batteries.

During assembling of a power battery, after a plurality of battery cells are arranged to form a battery module, end plates are mounted around the battery module, and the end plates are welded or screwed to the battery module to form a battery. When the end plates are welded, success of the welding is ensured only if the welding region on the end plates is accurately positioned. When the end plates are screwed, success of the assembling is ensured only if screw holes on the end plates are aligned. Therefore, the accuracy of the positioning before the assembling of the end plates directly affects the success rate of the battery assembling and the structural stability of the assembled battery.

When battery cells are working, the shell tends to expand in volume. Therefore, the end plates need to provide a binding force for the battery cells in the shell to avoid performance deterioration caused by a high expansion speed of the battery. The accuracy of the positioning of the end plates exerts a direct effect on the distribution of stress in the battery, and in turn, affects the overall structural stability of the battery.

The existing positioning apparatus just clamps the end plates simply and lets the end plates abut on an outer wall of the battery cells, without ensuring the accuracy of the positions of the end plates clamped, thereby being prone to poor structural stability after the end plates are subsequently fixed and assembled, and impairing the overall structural stability of the battery.

In view of the above problem, this application discloses a positioning apparatus. The positioning apparatus includes a positioning mechanism. A first driving piece in the positioning mechanism is disposed on a first fixed seat. By driving a first transmission piece to move, the first driving piece drives a second transmission piece to move. The second transmission piece is connected to the first abutment piece. When moving, the second transmission piece drives the first abutment piece to move to position the object-to-be-positioned. With a limiting portion connected to the second transmission piece and disposed on the first transmission piece, the second transmission piece is caused to automatically stop when moving to a travel limit position. In this way, the object-to-be-positioned automatically stops moving when being put into a desired position, thereby implementing a self-locking function after the first positioning mechanism defines the position, ensuring accuracy of positioning the object-to-be-positioned, avoiding poor positioning or excessive positioning, and effectively ensuring structural stability of the assembled battery.

The positioning apparatus provided in this application may serve a purpose of, but is not limited to the purpose of, positioning the end plates of a battery, and may be configured to, for example, position products of a box structure or in other shapes during assembling.

The battery disclosed in some embodiments of this application is applicable to, but not limited to, electrical devices such as a vehicle, watercraft, or aircraft.

An embodiment of this application provides an electrical device powered by a battery. The electrical device may be, but without being limited to, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

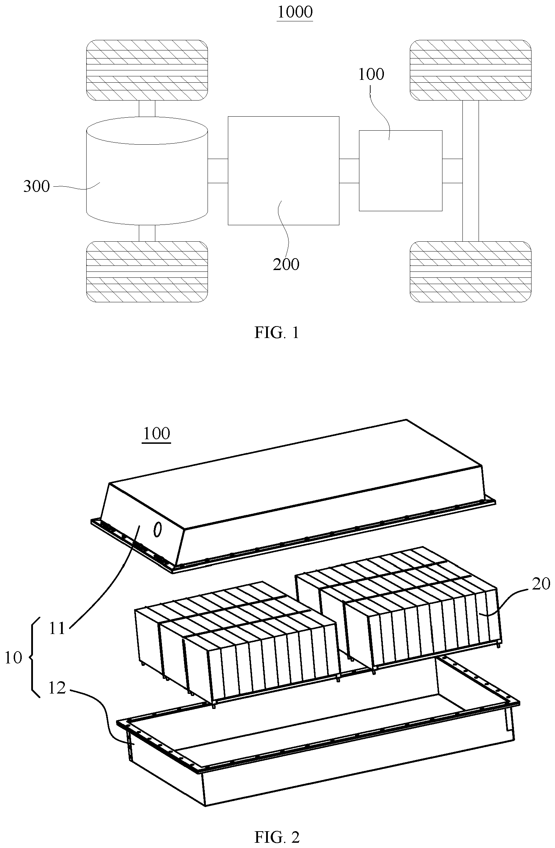

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is a schematic structural exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits on an opening side of the second part 12 so that the first part 11 and the second part 12 together define the accommodation space. Alternatively, both the first part 11 and the second part 12 may be hollow structures opened at one side. The opening side of the first part 11 fits the opening side of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 may be connected in series, parallel, or series-and-parallel pattern to form a battery 100 in the form of battery modules first. A plurality of battery modules are then connected in series, parallel, or series-and-parallel pattern to form a whole for being accommodated in the box 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, a lithium-sulfur battery, a sodium-ion battery, or a magnesium-ion battery. The battery cell 20 may be in the shape of a cylinder, flat body, cuboid, or the like.

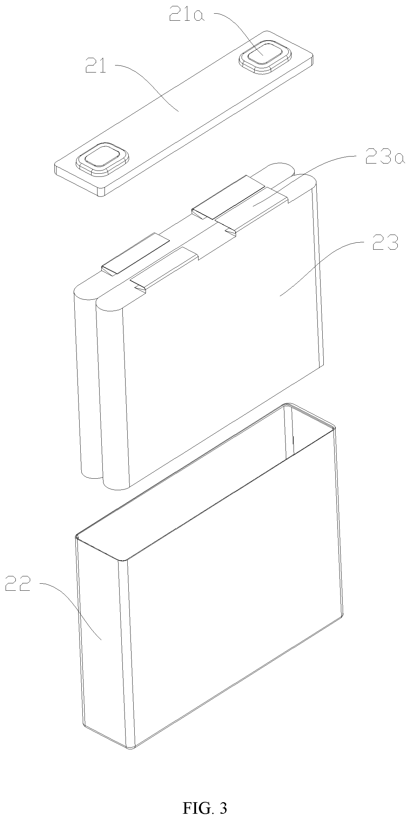

Referring to FIG. 3, FIG. 3 is a schematic structural exploded view of a battery cell 20 in a battery 100 according to some embodiments of this application. The battery cell 20 is a minimum unit for making up a battery. As shown in FIG. 3, the battery cell 20 includes an end cap 21, a housing 22, an electrode assembly 23, and other functional components.

The end cap 21 is a component that fits and covers the opening of the housing 22 to isolate the internal environment of the battery cell 20 from the external environment. Without limitation, the shape of the end cap 21 may be adapted to the shape of the housing 22 to fit the housing 22. In some embodiments, the end cap 21 may be made of a material of appropriate hardness and strength (such as aluminum alloy), thereby making the end cap 21 not prone to deform in a case of being pressed or impacted, and improving the structural strength and safety performance of the battery cell 20. Functional components such as electrode terminals 21a may be disposed on the end cap 21. The electrode terminals 21a may be configured to be electrically connected to the electrode assembly 23 to output or input electrical energy of the battery cell 20. In some embodiments, a pressure relief mechanism configured to release an internal pressure when the internal pressure or temperature of the battery cell 20 reaches a threshold may be further disposed on the end cap 21. The end cap 21 may also be made of a variety of materials such as copper, iron, aluminum, stainless steel, aluminum alloy, or plastic, without being particularly limited herein. In some embodiments, an insulation piece may be further disposed on an inner side of the end cap 21. The insulation piece may be configured to isolate an electrically connected component in the housing 22 from the end cap 21 to reduce short-circuit risks. For example, the insulator may be plastic, rubber, or the like.

The housing 22 is a component configured to fit the end cap 21 to form an internal environment of the battery cell 20. The formed internal environment may be used to accommodate the electrode assembly 23, an electrolytic solution, and other components. The housing 22 and the end cap 21 may be stand-alone components. An opening may be made on the housing 22. At the opening, the end cap 21 fits with the opening to form the internal environment of the battery cell 20. Not restrictively, the end cap 21 and the housing 22 may be integrated. The housing 22 may be in various shapes and sizes, such as a cuboid, cylinder, or hexagonal prism. Specifically, the shape of the housing 22 may depend on the specific shape and size of the electrode assembly 23. The housing 22 may be made of a variety of materials such as copper, iron, aluminum, stainless steel, aluminum alloy, or plastic, without being particularly limited herein.

The electrode assembly 23 is a component that reacts electrochemically in the battery cell 20. The housing 22 may contain one or more electrode assemblies 23. The electrode assembly 23 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab 23a. The positive tab and the negative tab may be located at one end of the body portion together or at two ends of the body portion respectively. In a charge-and-discharge process of the battery, the positive active material and the negative active material react with an electrolytic solution. The tabs 23a are connected to electrode terminals to form a current circuit.

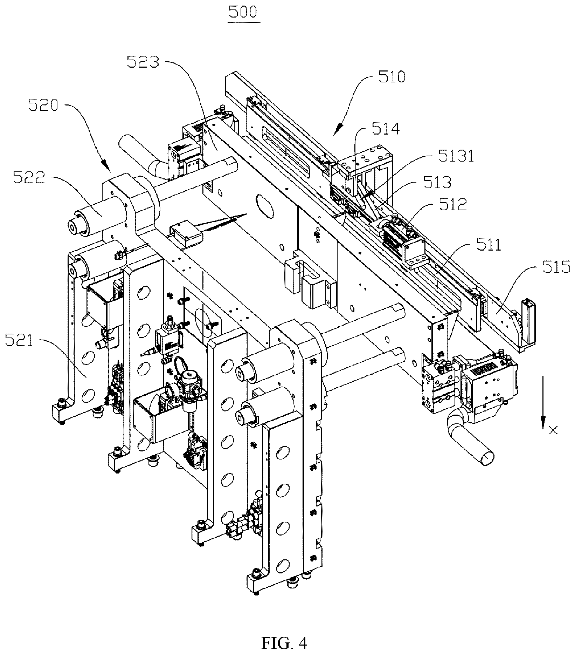

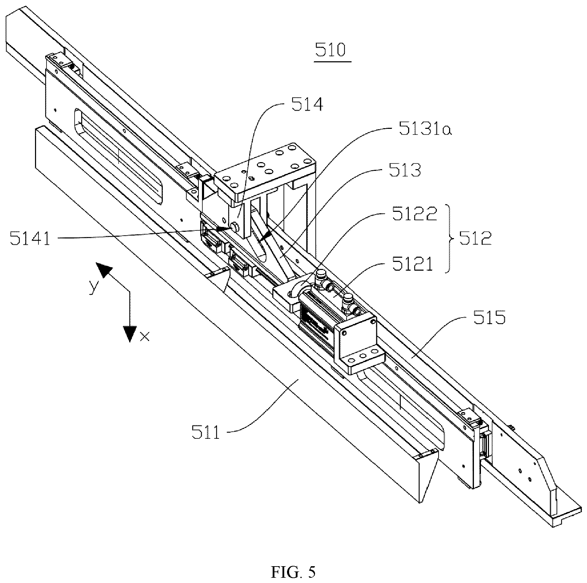

According to an aspect of an embodiment of this application, a positioning apparatus is provided. Specifically, referring to FIG. 4 and FIG. 5, FIG. 4 shows a structure of a positioning apparatus 500 according to an embodiment of this application. The positioning apparatus 500 includes a first positioning mechanism 510. The first positioning mechanism 510 includes: a first fixed seat 511, a first driving piece 512, a first transmission piece 513, a second transmission piece 514, and a first abutment piece 515. The first driving piece 512 is disposed on the first fixed seat 511. The first driving piece 512 is connected to the second transmission piece 514 through the first transmission piece 513 to drive the second transmission piece 514 to move. A limiting portion 5131 is disposed on the first transmission piece 513. The limiting portion 5131 is connected to the second transmission piece 514, and is configured to limit a stroke of the second transmission piece 514. The second transmission piece 514 is connected to the first abutment piece 515, and is configured to drive the first abutment piece 515 to move to position an object-to-be-positioned.

The first positioning mechanism 510 may be configured to position the object-to-be-positioned in a height direction, for example, to position the end plates of the battery in an x-axis direction in FIG. 4. Understandably, the first positioning mechanism 510 may also be configured to position the object-to-be-positioned in any direction.

Specifically, referring to FIG. 5, which shows a structure of a first positioning mechanism 510 in a positioning apparatus 500 according to an embodiment of this application, a first fixed seat 511 serves as a benchmark for other movable components, and may be a fixed plate or a fixed block.

The first driving piece 512 is disposed on the first fixed seat 511. The first driving piece 512 may be a hydraulic cylinder or pneumatic cylinder shown in the drawing, or a lead screw module or the like. The first body portion 5121 of the first driving piece 512 is fixed to the first fixed seat 511. The first driving rod 5122 is slidably disposed on the first body portion 5121 along the y-axis direction in the drawing, and the end portion of the first driving rod 5122 is further connected to the first transmission piece 513.

The first transmission piece 513 may be slidably disposed on the first fixed seat 511 along the y-axis direction through a slide rail structure, so as to slide along the y-axis direction as driven by the first driving rod 5122. Understandably, the first transmission piece 513 may be connected to only the first driving rod 5122 but not connected to the first fixed seat 511, so that the first driving rod 5122 drives the first transmission piece 513 to move.

The limiting portion 5131 on the first transmission piece 513 may be a slide hole 5131a disposed slantingly as shown in the drawing. The second transmission piece 514 is connected to the first transmission piece 513 through the slide hole 5131a. In this way, during movement of the first transmission piece 513, the inner wall of the slide hole 5131a provides an acting force to the second transmission piece 514, so that the second transmission piece 514 moves along the x-axis direction.

The second transmission piece 514 is further connected to the first abutment piece 515. The first abutment piece 515 abuts on the object-to-be-positioned as driven by the second transmission piece 514, for example, abuts on the top of the end plate in the battery along the x-axis direction and provides a downward force to the end plate, so that the end plate moves downward and settles at the desired position. The second transmission piece 514 may be connected to the first fixed seat 511 through the slide rail structure to ensure the structural stability of the second transmission piece 514 and the rectilinearity of the movement. Understandably, the second transmission piece 514 may be not connected to the first fixed seat 511, but the first abutment piece 515 is connected to the first fixed seat 511 to achieve rectilinearity of the movement of the second transmission piece 514.

Using the first positioning mechanism 510 shown in FIG. 5 as an example, the first positioning mechanism 510 positions the object-to-be-positioned based on the following working principles: the first driving rod 5122 of the first driving piece 512 moves along the y-axis direction, and pushes the first transmission piece 513 to move along the y-axis direction. During the movement of the first transmission piece 513, the second transmission piece 514 moves along the x-axis direction under an acting force of the inner wall of the slide hole 5131a, thereby driving the first abutment piece 515 to move along the x-axis direction to position the object-to-be-positioned. When the object-to-be-positioned is placed at the desired position, the second transmission piece 514 abuts on the rightmost inner wall of the slide hole 5131a, so that the first transmission piece 513 is restrained from moving further to the left, thereby implementing the self-locking function after the positioning, and ensuring the accuracy of the positioning of the object-to-be-positioned.

It is hereby noted that the above implementation is merely a preferred embodiment provided in this application. In other embodiments, the movement directions of the first driving piece 512, the first transmission piece 513, the second transmission piece 514, and the first abutment piece 515 may be adjusted to meet the positioning requirements of different products during assembling, so as to implement the positioning of the object-to-be-positioned in the desired direction, details of which are omitted here. In other embodiments of this application, the connection between the first driving piece 512 and the first transmission piece 513 may be gear-and-rack transmission. For example, the first driving piece 512 is a motor, a gear is sleeved around an output shaft of the motor, and a rack that meshes with the gear is disposed on the first transmission piece 513. When the output shaft of the motor rotates, the gear drives the rack to move, and causes the first transmission piece 513 to move. Alternatively, the limiting portion 5131 on the first transmission piece 513 may be a limiting block. Correspondingly, another limiting block is disposed on the second transmission piece 514. When the first abutment piece 515 moves and puts the object-to-be-positioned into the desired position, the limiting block on the first transmission piece 513 abuts on the limiting block on the second transmission piece 514 to restrict the first transmission piece 513 and the second transmission piece 514 from moving further, thereby implementing the self-locking function after the positioning, and ensuring the accuracy of positioning the object-to-be-positioned.

The positioning apparatus 500 includes a first positioning mechanism 510. The first driving piece 512 in the first positioning mechanism 510 is disposed on the first fixed seat 511. By driving the first transmission piece 513 to move, the first driving piece 512 drives the second transmission piece 514 to move. The second transmission piece 514 is connected to the first abutment piece 515. When moving, the second transmission piece 514 drives the first abutment piece 515 to move to position the object-to-be-positioned. With the limiting portion 5131 connected to the second transmission piece 514 and disposed on the first transmission piece 513, the second transmission piece 514 is caused to automatically stop when moving to a travel limit position. In this way, the object-to-be-positioned automatically stops moving when being put into a desired position, thereby implementing a self-locking function after the first positioning mechanism 510 defines the position, ensuring accuracy of positioning the object-to-be-positioned, avoiding poor positioning or excessive positioning, and effectively ensuring structural stability of the assembled battery.

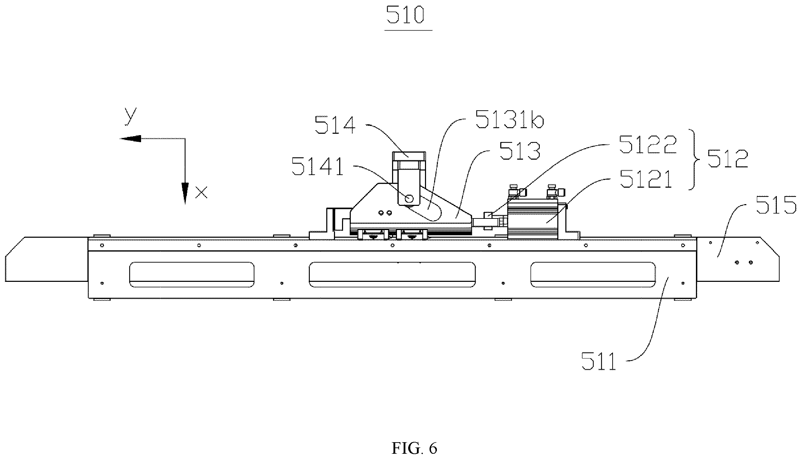

FIG. 6 shows a front view of a structure of a positioning apparatus 500 according to an embodiment of this application. In some embodiments of this application, the first transmission piece 513 is slidably connected to the first fixed seat 511 along a first direction. The second transmission piece 514 is slidably connected to the first fixed seat 511 along a second direction. The first direction is at an angle to the second direction. The limiting portion 5131 is a slide slot 5131b disposed on the first transmission piece 513. A connecting piece 5141 is disposed on the second transmission piece 514. The connecting piece 5141 is disposed in the slide slot 5131b. The connecting piece 5141 abuts on an inner wall of the slide slot 5131b to limit the stroke of the second transmission piece 514.

As shown in FIG. 6, the first direction is the y-axis direction shown in the drawing, and the second direction is the x-axis direction shown in the drawing. The first direction may be perpendicular to the second direction as shown in the drawing. Understandably, in other embodiments, the angle between the first direction and the second direction may be adjusted to an acute angle or an obtuse angle based on the required positioning direction of the object-to-be-positioned, as long as the movement of the first transmission piece 513 can drive the second transmission piece 514 to move.

The first transmission piece 513 and the second transmission piece 514 may be slidably disposed on the first fixed seat 511 through a slide rail structure or a roller structure.

In a specific embodiment shown in FIG. 6, the connecting piece 5141 may be a connecting rod. One end of the connecting piece 5141 is connected to the second transmission piece 514, and the other end of the connecting piece may be slidably accommodated in the slide slot 5131b. In this way, when the first transmission piece 513 moves along the y-axis direction, the inner wall of the slide slot 5131b provides an acting force to the connecting piece 5141 so that the second transmission piece 514 moves along the x-axis direction, thereby driving the first abutment piece 515 to abut and position the object-to-be-positioned.

In some embodiments, the connecting piece 5141 may be rotatably connected to the second transmission piece 514, thereby converting the sliding friction between the connecting piece 5141 and the slide slot 5131b into rolling friction, reducing the frictional resistance, and ensuring the smoothness of the first transmission piece 513 in driving the second transmission piece 514 to move.

By slidably connecting the first transmission piece 513 and the second transmission piece 514 to the first fixed seat 511 along the first direction and the second direction respectively, the first direction being at an angle to the second direction, the rectilinearity of the sliding directions of the first transmission piece 513 and the second transmission piece 514 is ensured, and in turn, the accuracy of the positioning is ensured. The limiting portion 5131 is designed as a slide slot 5131b, and a connecting piece 5141 slidably connected to the slide slot 5131b is disposed on the second transmission piece 514. In this way, when the first transmission piece 513 moves, the inner wall of the slide slot 5131b provides an acting force to the connecting piece 5141 to drive the second transmission piece 514 to move, thereby implementing the positioning for the object-to-be-positioned. In addition, when the second transmission piece 514 moves to the desired position, the connecting piece 5141 abuts and retains the inner wall of the slide slot 5131b at an end of the slide slot, thereby limiting the stroke of the second transmission piece 514, and in turn, implementing self-locking of the object-to-be-positioned after positioning, ensuring the accuracy of positioning, and avoiding poor positioning or excessive positioning.

Still referring to FIG. 5, in some embodiments of this application, the first abutment piece 515 is fixedly connected to the second transmission piece 514. The first abutment piece 515 is slidably connected to the first fixed seat 511 along the second direction so that the second transmission piece 514 and the first fixed seat 511 are slidably connected to each other.

The first abutment piece 515 may be slidably connected to one side of the first fixed seat 511 along the x-axis direction in FIG. 5 through one or more slide rail structures. The second transmission piece 514 is relatively fixed to the first abutment piece 515, and is not connected to the first fixed seat 511. In this way, the second transmission piece 514 is indirectly slidably connected to the first fixed seat 511 through the first abutment piece 515.

By fixedly connecting the first abutment piece 515 to the second transmission piece 514 and slidably connecting the first abutment piece 515 to the first fixed seat 511 along the second direction, the structure of the first positioning mechanism 510 is optimized, so that a proper movement track of the second transmission piece 514 can still be ensured without implementing connection between the second transmission piece 514 and the first fixed seat 511. Moreover, by directly slidably connecting the first abutment piece 515 to the first fixed seat 511 along the second direction, the proper movement track of the first abutment piece 515 is ensured more accurately, and inaccurate positioning caused by a deviated movement track of the first abutment piece 515 is avoided.

Still referring to FIG. 6, in some embodiments of this application, the first direction is perpendicular to the second direction. The slide slot 5131b is disposed slantingly. In this way, when the first transmission piece 513 slides, the inner wall of the slide slot 5131b pushes the connecting piece 5141 to drive the second transmission piece 514 to slide.

For the positioning and assembling of the battery end plates, the accuracy of the positioning of the end plates in a vertical direction is of vital importance. This application lets the first direction be perpendicular to the second direction, and disposes the slide slot 5131b slantingly. In this way, when the first driving piece 512 and the first transmission piece 513 move horizontally, the inner wall of the slide slot 5131b provides a force in the slanting direction to the connecting piece 5141 to push the second transmission piece 514 and the first abutment piece 515 to move along the vertical direction, thereby implementing accurate positioning of the object-to-be-positioned in the vertical direction, for example, accurate positioning of the end plates in the vertical direction.

Still referring to FIG. 5, in some embodiments of this application, the slide slot 5131b runs through the first transmission piece 513 to form a slide hole 5131a. The connecting piece 5141 runs through the slide hole 5131a.

As shown in FIG. 5, the connecting piece 5141 runs through the slide hole 5131a, and both ends of the connecting piece are connected to the second transmission piece 514.

By letting the slide slot 5131b run through the first transmission piece 513 to form a slide hole 5131a and letting the connecting piece 5141 run through the slide hole 5131a, the connecting piece 5141 is prevented from coming out of the slide slot 5131b when moving, thereby ensuring the stability of the transmission between the first transmission piece 513 and the second transmission piece 514, and in turn, ensuring the accuracy of the positioning.

Still referring to FIG. 5, in some embodiments of this application, the connecting piece 5141 is rotatably disposed on the second transmission piece 514.

By rotatably disposing the connecting piece 5141 on the second transmission piece 514, the sliding friction between the slide slot 5131b and the connecting piece 5141 is converted into rolling friction of the connecting piece 5141 relative to the inner wall of the slide slot 5131b when the first transmission piece 513 drives the second transmission piece 514 to move, thereby reducing the resistance of the first transmission piece 513 in driving the second transmission piece 514 to move, reducing energy consumption, and ensuring smoothness and steadiness of the transmission.

Still referring to FIG. 4, in some embodiments of this application, the positioning apparatus 500 further includes a second positioning mechanism 520. The second positioning mechanism 520 includes: a second fixed seat 521, a second driving piece 522, and a second abutment piece 523. The second fixed seat 521 is disposed on a side of the first fixed seat 511, the side being oriented toward the movement direction of the first abutment piece 515. The second driving piece 522 is disposed on the second fixed seat 521, connected to the second abutment piece 523, and configured to drive the second abutment piece 523 to move along a direction at an angle to the movement direction of the first abutment piece 515, so as to position the object-to-be-positioned.

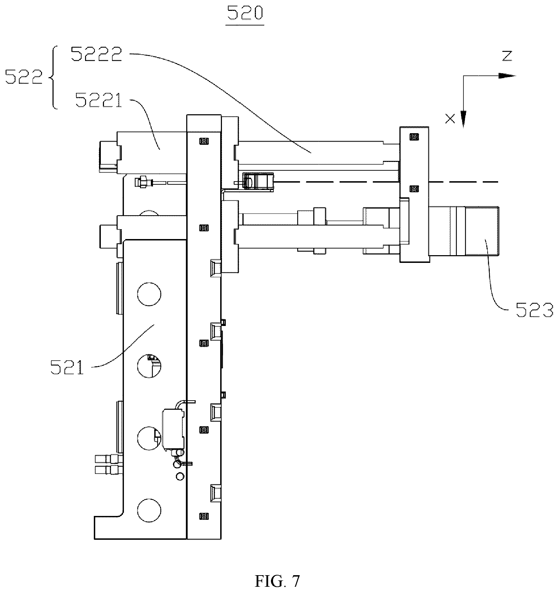

Still referring to FIG. 4 together with FIG. 7, FIG. 7 shows a side view of a structure of a second positioning mechanism 520 in a positioning apparatus 500 according to an embodiment of this application. In the specific embodiment shown in the drawings, the first positioning mechanism 510 is configured to position the object-to-be-positioned in the x-axis direction, and the second positioning mechanism 520 is configured to position the object-to-be-positioned in the z-axis direction.

The second fixed seat 521 serves as a benchmark against which the second driving piece 522 drives the second abutment piece 523 to move, and may be a support structure as shown in the drawing, or may be another structure such as a firmware plate or a fixed block.

The second driving piece 522 may be a cylinder, a hydraulic cylinder, a lead screw module, or the like. The second driving piece 522 may include a second body portion 5221 and a second driving rod 5222. The second body portion 5221 is fixed to the second fixed seat 521. An end portion of the second driving rod 5222 is connected to the second abutment piece 523. The second body portion 5221 drives the second driving rod 5222 to move along the z-axis direction, thereby driving the second abutment piece 523 to abut on the object-to-be-positioned and position the object-to-be-positioned.

It is hereby noted that the drawings just show a preferred embodiment provided in this application. In other embodiments, the movement and positioning direction of the first positioning mechanism 510 may be not perpendicular to the movement and positioning direction of the second positioning mechanism 520. The specific positioning direction may be set based on the product assembling characteristics of the object-to-be-positioned. For example, the two directions may be at an angle of 45° to each other, and the angle is not limited herein.

The object-to-be-positioned is positioned in another direction by the second positioning mechanism 520. Specifically, by disposing the second fixed seat 521 on a side of the first fixed seat 511 oriented toward the movement direction of the first abutment piece 515, and by disposing the second driving piece 522 on the second fixed seat 521 and driving the second abutment piece 523 to move in a direction at an angle to the movement direction of the first abutment piece 515, the object-to-be-positioned is positioned in the direction at an angle to the movement direction of the first abutment piece 515. In this way, the positioning can be implemented from a plurality of angles, thereby further ensuring the accuracy of positioning, meeting the positioning requirements of more products, and increasing the compatibility between the positioning apparatus 500 and different objects-to-be-positioned.

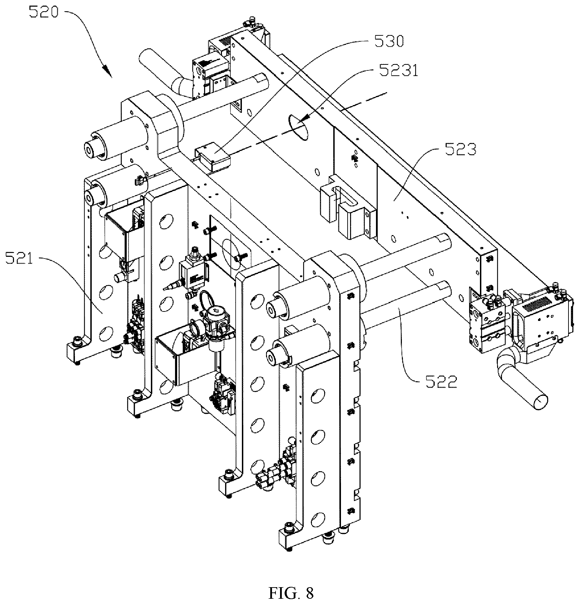

Referring to FIG. 8, which shows a three-dimensional structure of a second positioning mechanism 520 in a positioning apparatus 500 according to an embodiment of this application, in some embodiments of this application, the positioning apparatus 500 further includes a ranging mechanism 530. The ranging mechanism 530 is disposed on at least one of the first fixed seat 511 or the second fixed seat 521 and configured to detect a movement distance of the object-to-be-positioned.

As shown in FIG. 8, an example is described in which the ranging mechanism 530 is disposed on the second fixed seat 521. The principles are the same when the ranging mechanism 530 is disposed on the first fixed seat 511. The ranging mechanism 530 may be a laser rangefinder. The ranging mechanism 530 is fixed to the second fixed seat 521 and aligned with the direction in which the second abutment piece 523 is oriented. When the second abutment piece 523 drives the object-to-be-positioned to move to perform positioning, the ranging mechanism 530 obtains a displacement distance of the object-to-be-positioned by detecting the change in the length of the laser light path reaching the object-to-be-positioned, thereby determining whether the object-to-be-positioned is accurately positioned.

In the embodiment shown in FIG. 8, in order to prevent the laser light path from being blocked by the second abutment piece 523, an avoidance hole is created on the second abutment piece 523 to ensure that the laser light path can reach the object-to-be-positioned smoothly. Understandably, in other embodiments, the ranging mechanism 530 may be disposed at a position staggered from the second abutment piece 523, so as to prevent the second abutment piece 523 from affecting the ranging.

Still referring to FIG. 8, in some embodiments of this application, the ranging mechanism 530 includes a laser rangefinder. The laser rangefinder is disposed on a side of the second fixed seat 521, the side is oriented toward the second abutment piece 523. An avoidance hole 5231 is created on the second abutment piece 523 at a position opposite to the laser rangefinder. The avoidance hole is configured to transmit a laser beam emitted by the laser rangefinder to the object-to-be-positioned.

For some smaller objects to be positioned, the second abutment piece 523 may completely cover the object-to-be-positioned when abutting on the object-to-be-positioned, thereby hindering the laser beam from reaching the object-to-be-positioned when the laser rangefinder is staggered from the second abutment piece 523.

Considering the above problem, by disposing the laser rangefinder on a side of the second fixed seat 521 oriented toward the second abutment piece 523, and by creating an avoidance hole 5231 on the second abutment piece 523 at a position opposite to the laser rangefinder, this application ensures that the movement distance of the object-to-be-positioned can still be detected even if the second abutment piece 523 completely covers the object-to-be-positioned when the second abutment piece abuts on the object-to-be-positioned.

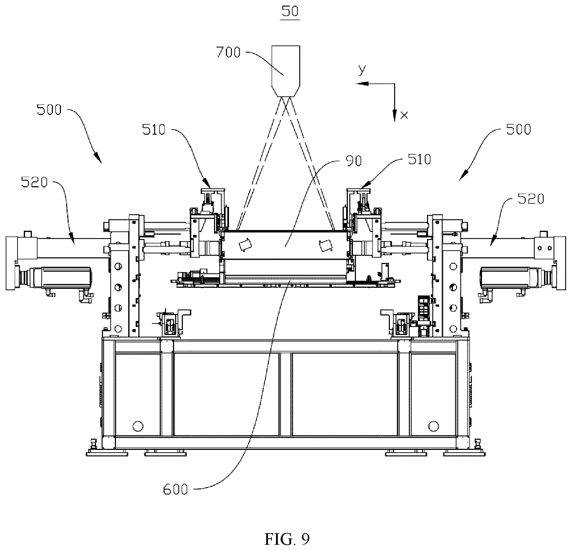

According to another aspect of an embodiment of this application, a piece of welding equipment is provided. Specifically, referring to FIG. 9, which is a front view of a structure of the welding equipment 50 according to an embodiment of this application, the welding equipment 50 includes the positioning apparatus 500 disclosed in any one of the above embodiments.

In the welding equipment 50, the positioning apparatus 500 stops moving and is self-locked when the object-to-be-positioned is put into a desired position by the positioning apparatus 500, thereby ensuring the accuracy of the positioning of the object-to-be-positioned, avoiding poor positioning or excessive positioning, providing good structural conditions for subsequent welding operations, and ensuring the structural stability of the object-to-be-positioned after the welding and assembling.

Still referring to FIG. 9, in some embodiments of this application, the welding equipment 50 further includes a carrier 600 and a welding apparatus 700. The carrier 600 is configured to carry a battery module 90. The positioning apparatus 500 is disposed on at least two sides of the carrier 600 and configured to position the object-to-be-positioned. The welding apparatus 700 is disposed in alignment with the carrier 600 and configured to weld the object-to-be-positioned.

According to some embodiments of this application, the object-to-be-positioned is an end plate of the battery module 90.

The carrier 600 may be a pallet. Because the battery module 90 includes a plurality of battery cells, the movement, positioning, and assembling of the battery module 90 are facilitated by placing the battery module 90 on the carrier 600.

The positioning apparatus 500 is disposed on at least two sides of the carrier. The end plate is positioned by the first positioning mechanism 510 on the positioning apparatus 500 to ensure the accuracy of the position of the end plate in the x-axis direction. The end plate is positioned by the second positioning mechanism 520 to ensure the accuracy of the position of the end plate in the y-axis direction.

The welding apparatus 700 may be a laser welder that welds the end plate by emitting a laser beam, thereby implementing the assembling of the battery module 90.

The carrier 600 makes it convenient to move and carry the battery module 90. The positioning apparatus 500 implements accurate positioning of the end plates in the battery module 90, thereby ensuring good conditions for subsequent welding. The welding apparatus 700 is configured to weld the positioned end plates to implement assembling of the battery module 90.

It is hereby noted that in the welding equipment 50, the positioning apparatuses 500 may be disposed on just two sides of the carrier 600 as shown in FIG. 9, or may be disposed around the carrier 600. In addition, the second positioning mechanisms 520 in the positioning apparatus 500 may move on both sides to implement positioning; or, a second positioning mechanism 520 on one side is fixed, and a second positioning mechanism 520 on the other side pushes the battery module 90 to move, so that the battery module 90 abuts between the two second positioning mechanisms 520 to position and fix the end plates on the battery module 90.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A positioning apparatus, comprising a first positioning mechanism, wherein the first positioning mechanism comprises: a first fixed seat, a first driving piece, a first transmission piece, a second transmission piece, and a first abutment piece;
the first driving piece is disposed on the first fixed seat, and the first driving piece is connected to the second transmission piece through the first transmission piece to drive the second transmission piece to move;
a limiting portion is disposed on the first transmission piece, the limiting portion is connected to the second transmission piece, and is configured to limit a stroke of the second transmission piece; and
the second transmission piece is connected to the first abutment piece, and is configured to drive the first abutment piece to move to position an object-to-be-positioned.

2. The positioning apparatus according to claim 1, wherein the first transmission piece is slidably connected to the first fixed seat along a first direction, the second transmission piece is slidably connected to the first fixed seat along a second direction, and the first direction is at an angle to the second direction; and
the limiting portion is a slide slot disposed on the first transmission piece, a connecting piece is disposed on the second transmission piece, the connecting piece is slidably disposed in the slide slot, and the connecting piece abuts on an inner wall of the slide slot to limit the stroke of the second transmission piece.

3. The positioning apparatus according to claim 2, wherein the first abutment piece is fixedly connected to the second transmission piece, and the first abutment piece is slidably connected to the first fixed seat along the second direction so that the second transmission piece and the first fixed seat are slidably connected to each other.

4. The positioning apparatus according to claim 2, wherein the first direction is perpendicular to the second direction, the slide slot is disposed slantingly so that when the first transmission piece slides, an inner wall of the slide slot pushes the connecting piece to drive the second transmission piece to slide.

5. The positioning apparatus according to claim 2, wherein the slide slot runs through the first transmission piece to form a slide hole, and the connecting piece runs through the slide hole.

6. The positioning apparatus according to claim 2, wherein the connecting piece is rotatably disposed on the second transmission piece.

7. The positioning apparatus according to any one of claims 1 to 6, further comprising a second positioning mechanism, wherein the second positioning mechanism comprises: a second fixed seat, a second driving piece, and a second abutment piece;
the second fixed seat is disposed on a side of the first fixed seat, the side being oriented toward a movement direction of the first abutment piece; and
the second driving piece is disposed on the second fixed seat, connected to the second abutment piece, and configured to drive the second abutment piece to move along a direction at an angle to the movement direction of the first abutment piece, so as to position the object-to-be-positioned.

8. The positioning apparatus according to claim 7, wherein the positioning apparatus further comprises a ranging mechanism, and the ranging mechanism is disposed on at least one of the first fixed seat or the second fixed seat and configured to detect a movement distance of the object-to-be-positioned.

9. The positioning apparatus according to claim 8, wherein the ranging mechanism comprises a laser rangefinder, the laser rangefinder is disposed on a side of the second fixed seat, the side is oriented toward the second abutment piece, an avoidance hole is created on the second abutment piece at a position opposite to the laser rangefinder, and the avoidance hole is configured to transmit a laser beam emitted by the laser rangefinder to the object-to-be-positioned.

10. A piece of welding equipment, comprising the positioning apparatus according to any one of claims 1 to 9.

11. The welding equipment according to claim 10, further comprising a carrier and a welding apparatus;
the carrier is configured to carry a battery module;
the positioning apparatus is disposed on at least two sides of the carrier and configured to position the object-to-be-positioned; and
the welding apparatus is disposed in alignment with the carrier and configured to weld the object-to-be-positioned.

12. The welding equipment according to claim 11, wherein the object-to-be-positioned is an end plate of the battery module.
